# EUROPEAN PATENT APPLICATION

(11) **EP 1 262 859 A2**
(43) Date of publication of application: **04.12.2002**
(21) Application number: 02253808.6
(22) Date of filing: 30.05.2002
(51) Int. Cl.: G06F 1/00

(54) **Information processing apparatus and method for executing software input from outside**

(30) Priority: 30.05.2001 JP 2001162578
(71) Applicant: CANON KABUSHIKI KAISHA, Tokyo (JP)
(72) Inventor: Ohi, Hirokazu, Ohta-ku, Tokyo (JP)
(74) Representative: Beresford, Keith Denis Lewis

(57) **Abstract**

An information processing apparatus that safely executes unreliable software input from the outside is provided by the present invention.

In the information processing apparatus according to the present invention, a high level API judges whether or not an application that invoked the high level API has a certificate. If it has a certificate, the certificate that is included in a code is inspected. If the certificate is correct, a low level API is invoked and a requested function is executed. If the application does not have a certificate or the certificate is not correct, security at the time when the requested function is executed is evaluated. Whether or not it is safe to execute the requested function is judged. If the function execution is judged to be safe, a low level API is invoked. If it is judged to be not safe, a low level API is not invoked and a message of an error is returned.

## Description

The present invention relates to an information processing apparatus and a method of processing information in order to more safely execute software input from the outside.

Conventionally, there have been proposed information processing apparatuses and systems for processing information in order to execute software which is not originally built in and is input from the outside. If the software is input from the outside, its security will be questioned when executed.

If malicious software is mistakenly executed, it can lead to the malfunction or demolition of equipment. There have been a variety of proposals for ways to ensure the security of the software before it is executed.

For example, in Japanese Patent Application Laid-Open No. 11-320287, whether or not executable data that has been downloaded is authenticated with a guarantee of a third party is judged. If it is not, its access to computer resources is prohibited.

In Japanese Patent Application Laid-Open No. 2000-57045, authentication and authorization of a client are confirmed with a certificate given to a client code module, and a permission object that enables a permitted method to be invoked is passed from a server to the client.

In Japanese Patent Application Laid-Open No. 10-83310, as to authentication, a third party does the certifying. As to access control, an access control list distributed together with a program is inspected by a client system.

However, it is desired that those conventional examples make further improvements in terms of the following points:

To authenticate a client, in conventional cases, a certificate is used. While using the certificate is a method that provides high security, obtaining one requires costs as it has to be issued by a third party. Furthermore, security ensuring is left to the third party, and this does not always provide perfect security.

If the authentication is done with a certificate, software that does not have a certificate is only given the minimum level of authorization. For example, software that is downloaded from the outside and does not have a certificate is not permitted to access a local file system.

Contrarily, there have been conventionally proposed methods in which certificates are not used. However, they apply authentication by password or encrypted user IDs, which poses problems of lowered security and applications confined within the local.

Accordingly, to address such problems, it is an object of the invention to provide an information processing apparatus, a method of processing information and a program that may safely execute unreliable software, for example a software input from the outside.

It is another object of the invention to provide an information processing apparatus, a method of processing information and a program that may prevent the execution of malicious programs intended to cause the malfunction or demolition of equipment.

It is yet another object of the invention to provide an information processing apparatus, a method of processing information and a program that are capable of giving authorization for less-limited equipment control to software input from the outside.

This invention provides an information processing apparatus for executing a requested function in accordance with the execution of a program code. The apparatus comprises reliability judging means for judging the reliability of said program code, security evaluating means for evaluating the security of said function requested by said program code, when said reliability judging means judges said program code to be unreliable, and control means for executing said requested function, when said security evaluating means evaluates said requested function as being safe.

Furthermore, this invention provides a method of processing information for executing a requested function in accordance with the execution of a program code. The method comprises the steps of, judging the reliability of said program code, evaluating the security of said function requested by said program code, when said program code is judged to be unreliable, and executing said requested function when said requested function is evaluated as being safe.

A number of embodiments of the invention will now be described, by way of example only, with reference to the accompanying drawings in which:

FIG. 1 is a block diagram showing a configuration of an information processing apparatus in an embodiment.

FIG. 2 is a diagram showing an example of a software hierarchy of a client 101.

FIG. 3 is a diagram showing another example of a software hierarchy of the client 101.

FIG. 4 is a flowchart showing an operation procedure of a high level native API.

FIG. 5 is a flowchart showing an operation procedure of a high level API where a certificate is not inspected.

FIG. 6 is a flowchart showing an operation procedure of a low level API.

FIG. 7 is a flowchart showing an operation procedure of a low level API.

FIG. 8 is a flowchart showing an operation procedure of an imaging API being a level API.

FIG. 9 is a flowchart showing an operation procedure of an imaging API that prevents imaging from being repeated at very short intervals.

FIG. 10 is a flowchart showing an operation procedure of an e-mail transmitting API.

FIG. 11 is a flowchart showing an operation procedure of a timer API.

FIG. 12 is a flowchart showing an operation procedure of a functional API where security evaluation and function execution are carried out by one API.

One embodiment of the invention will be described with reference to the drawings:

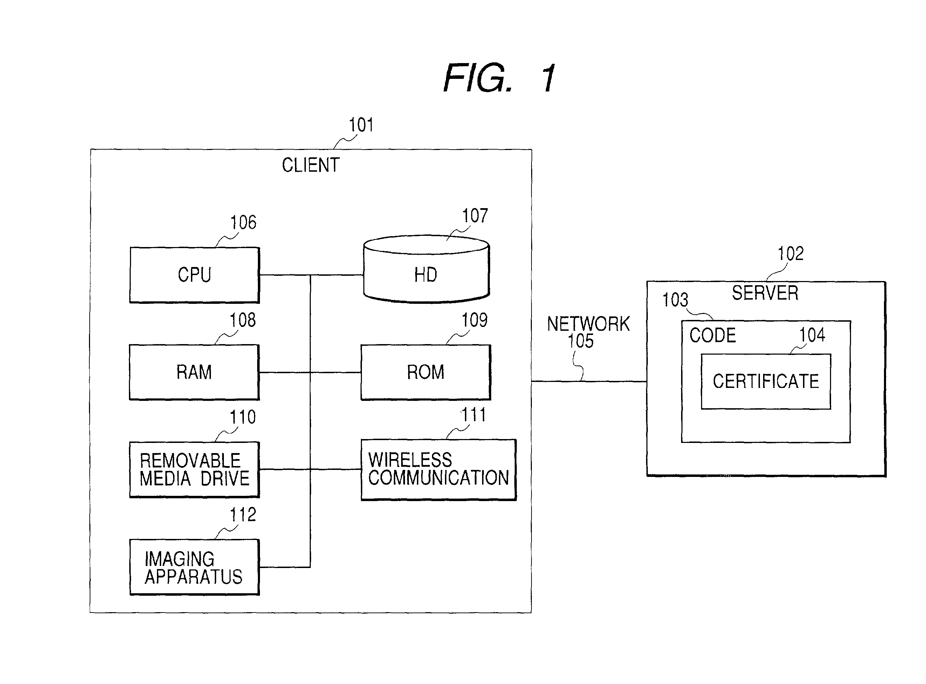

FIG. 1 is a block diagram showing a configuration of an information processing apparatus in this embodiment. In the Figure, 101 indicates a client computer (simply referred to as a client).
The client 101 comprises a CPU 106 for controlling operations of the entirety, a hard disk (HD) 107, a RAM 108 for temporarily storing data and such, a ROM 109 for storing program codes (simply referred to as codes) and such, a removable media drive 110 which storage media (removable media) for exchanging codes or data with outside are freely inserted in or removed from, a wireless communication 111 for communicating with outside by radio, and an imaging apparatus 112.

All the above devices are show an example of devices that would be included in the client 101. Some of those can be omitted and other devices may be comprised.

In the Figure, 102 indicates a server for storing a code 103 that is input to and executed by the client 101. The code 103 includes a certificate 104 that indicates the creator of the code. The certificate 104 is signed with a secret key owned by a third-party organization. Those who try to authenticate the certificate 104 can confirm the creator of the code by verifying the certificate 104 with a public key of the above third-party organization. This makes it possible to judge the security of the code.

105 indicates a network for connecting the client 101 with the server 102. The code 103 is sent from the server 102 to the client 101 through the network 105. The network 105 may be wired or wireless and may be any form, not to mention a LAN, a WAN, or the Internet.

For the client 101, means for inputting the code 103 from the outside is not limited to the network 105. The code 103 may be stored in a storage medium (removable medium) and installed in the client 101 through the removable media drive 110.

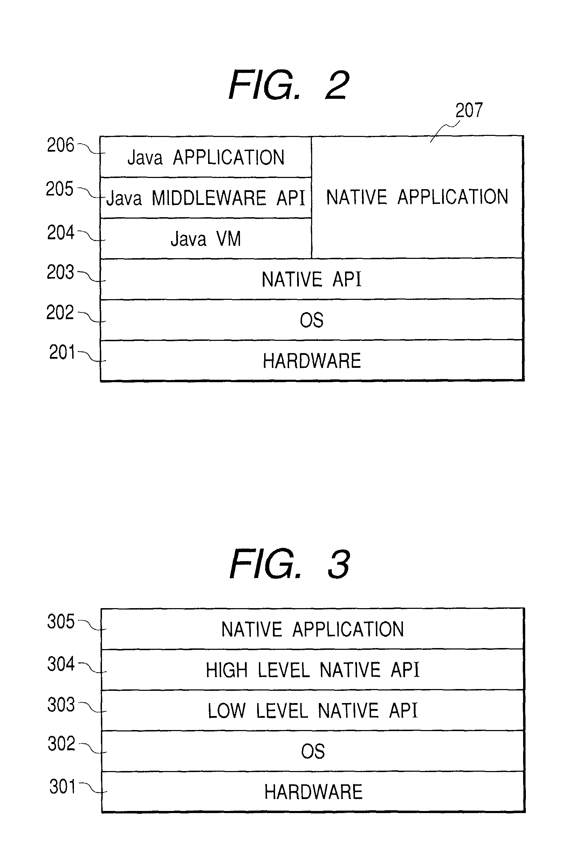

FIG. 2 is a diagram showing an example of a software hierarchy of the client 101.

In the Figure, 201 indicates hardware. 202 indicates an operating system (OS). 203 indicates a native application programming interface (API) for executing various functions of the client 101 and it is described in such a language as C/C++ language.

204 indicates a Java Virtual Machine (Java VM), and it can execute applications that are described in Java language. Java is a trademark of Sun Microsystems, Inc. in the United States and other countries. 205 indicates a Java Middleware API, which is an API described in Java language for executing various functions of the client 101. These APIs can be regarded as a kind of high level API and invoke a native API 203, which is a corresponding low level API for executing the same function. These low level APIs are described according to Java Native Interface (JNI, a protocol for invoking a function of the C/C++ language from the Java language). 206 indicates a Java application and 207 indicates a native application.

FIG. 3 is a diagram showing another example of a software hierarchy of the client 101.

In the Figure, 301 indicates hardware. 302 indicates an OS. 303 indicates a low level native API (simply referred to as a low level API) and it is described in a language such as the C/C++ language. It executes various functions of the client 101. 304 indicates a high level native API (simply referred to as a high level API) and it is also described in such a language as the C/C++ language. The high level native API 304 executes various functions of the client 101 by invoking the corresponding low level native API 303. 305 indicates a native application.

Operation of the client 101 having such a configuration will be described.

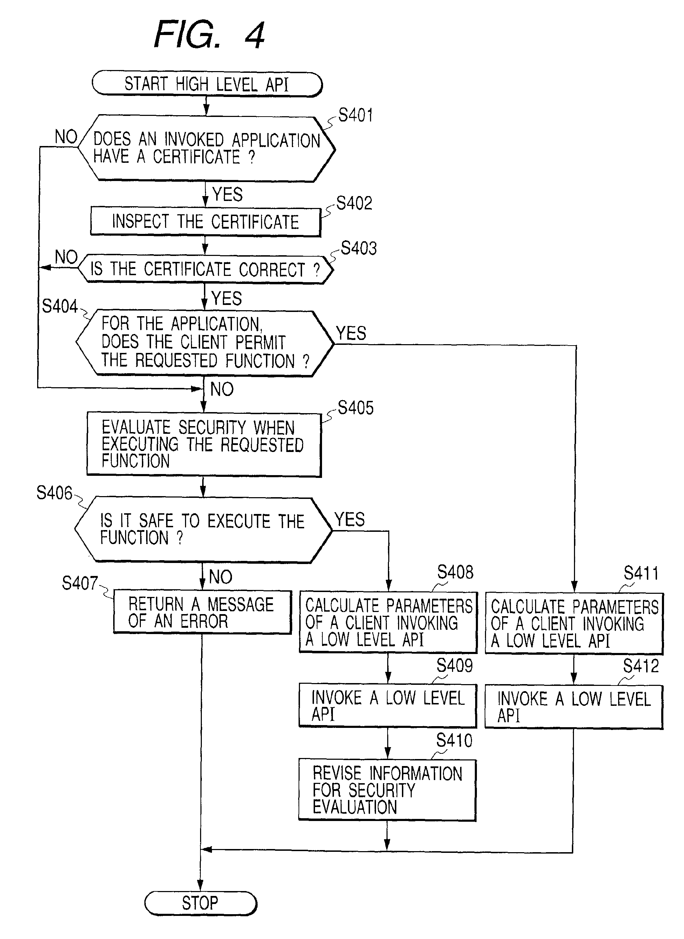

FIG. 4 is a flowchart showing an operation procedure of a high level native API. The high native API is invoked from an application (any of the Java application 206, native application 207, native application 305).

This application is stored in memories such as the RAM 108, ROM 109. Before being stored in the memory, the application may exist in the server 102 or may exist in the ROM 109 from the beginning. The CPU 106 reads it and executes the procedure of FIG. 4.

When a high level API is invoked from the application, first, the high level API judges whether or not the application which invoked the high level API has a certificate (step S401). The code 103 of the application being executed includes the certificate 104 that indicates the creator of the code.

However, there is a case where it does not include a certificate. For example, if the code creator is judged to be reliable by an operation assuror of the client 101 (manufacturer of the client 101, for example), attaching the certificate 104 has significance. But in a contrary case, attaching the certificate 104 gives no significance, and in some cases the certificate 104 is not attached even if the code 103 is created. When a method of creating an application that can be operated in the client 101 is open to the public, it often occurs that a general user creates a code. In such a case, the code creator does not necessarily attach a certificate which requires costs.

On the other hand, the certificate 104 does not necessarily need to be attached to the code 103 that is written into the ROM 109 at the time of shipment of the client 101. In this example, to obviously show that the code 103, which is stored in the ROM 109, is reliable, and that it is different in that respect from the code 103 that does not have the certificate 104 attached, the certificate 104 is attached.

If the application has a certificate in step S401, the certificate 104 included in the code 103 is inspected (step S402). In this inspection, the public key of the third-party is used. According to the result, whether or not the certificate 104 is correct is judged (step S403). If the certificate 104 is correct, the client 101 determines whether or not to permit the code creator (application) indicated by the certificate 104 to execute a function that its high level API should execute (step S404).

In this determination, a table (not shown) is used in which code creators and corresponding permitted functions are noted. The certificate 104 itself may have a list of permitted functions. API logic itself may have a step process to judge whether or not the code creator is OK.

In the case where the application is permitted to execute the function in step S404, in order to pass information on what invokes a low level API (here, an identifier of the high level API) as parameters for invoking a low level API, parameters of a client invoking a low level API are calculated (step S411). The parameters of an invoking client may be the high level API identifier (name of the API, for example) itself. In this case, however, as it is easy for other functions to pretend to be the high level API, here, the parameters are an identifier signed with the secret key of the high level API itself. Instead of the secret key, a common key only known to the high level API and the low level API may be used.

After the parameters are set, a low level API is actually invoked (step S412), and the requested function is executed. After this, the processing finishes. In order to pass information on what invokes a low level API to the low level API, other methods may be applied instead of passing parameters. Furthermore, parameters are not necessary when the low level API is able to know what invokes it by checking a call stack, which also makes the calculation of step S411 unnecessary.

On the other hand, when the application invoked in step S401 does not have a certificate, when the certificate is not correct in step S403, or when the function which the high level API should execute is not permitted to be executed in step S404, the invoked application is judged to be unreliable, or the function is judged to be impermissible when there is no condition. Therefore, much attention is needed when a low level API is invoked. In this case, security is evaluated when the requested function is executed (step S405).

Whether or not it is safe to execute the function is judged (step 406). If it is judged to be safe to execute the function, parameters of a client invoking a low level API is calculated (step S408) similarly to the process of step S411, and a low level API is invoked (step S409). And information for security evaluation is revised (step S410). After this, the processing finishes. This information will be used to re-evaluate security in step 405 next time a high level API is invoked.

On the other hand, if it is judged to be not safe in step S406, a low level API is not invoked, and a message of an error is returned (step S407), and the processing finishes.

In this embodiment, information for security evaluation is revised in step S410. However, this process is not executed to continue to the process step of S412. This means that function limitation based on the security evaluation is effective only for unreliable applications and not for reliable applications. In other words, for example, if an upper limit is put on the number of times that a particular function is executed and an unreliable application is not permitted to execute function to exceed the upper limit, the number of executing times is increased in step S410 every time the function is executed in step S409.

In step S406, whether or not the number of executing times exceeds the upper limit is judged. According to the result of the judgment, whether or not to permit the function execution is determined. This determination, however, has no influence on reliable applications. An application that is still reliable even if its number of executing times has exceeded the upper limit can execute the function.

Furthermore, although information for security evaluation is revised in step S410, this process is dispensable. There are some cases where, without information revising, it is possible to evaluate security next time a high level API is invoked. For example, it would be assumed that the client 101 is undertaking a multitasking operation and is performing important processing in a certain task and does not want an unreliable application to execute a function which interferes with this processing. In such a case, security evaluation in step S405 may only judge whether or not the important processing is being done at present, and it is not necessary to revise information in step S410.

Moreover, in the flowchart of FIG. 4, although the certificate is inspected when the high level API is executed, this is not an indispensable process, and the reliable application is provided to invoke a high level API. When the reliable application is supposed to invoke a low level API directly and only the unreliable application is supposed to invoke a high level API, certificate inspection and the procedure involved (step S401 to step S404) are not necessary.

For example, the code 103 stored in the ROM 109 is reliable and this invokes a low level API directly, and the code 103 downloaded from the server 102 is unreliable and this can not invoke a low level API directly and can only invoke a high level API. In this way, the high level API may always carry out security evaluation, and does not need to verify the code creator.

Especially when the code 103 downloaded from the server 102 is described in Java language, it is normal to make the native API 203, which is a low level API, not to be directly invoked, and it is not necessary to specially add other means. The code 103 stored in the ROM 109 should be reliable, so that the certificate 104 does not need to be attached. Furthermore, as it is known to be safe to invoke a low level API, it is unnecessary to set the parameters of an invoking client that is done in step S408.

In the process shown in FIG. 4, the certificate is inspected so as to judge whether or not the application is reliable. As long as the application can be judged, other methods may be applied instead of inspecting the certificate. Such a method may be a unique method of a native system that can not be known to or used by the code 103 input from the outside.

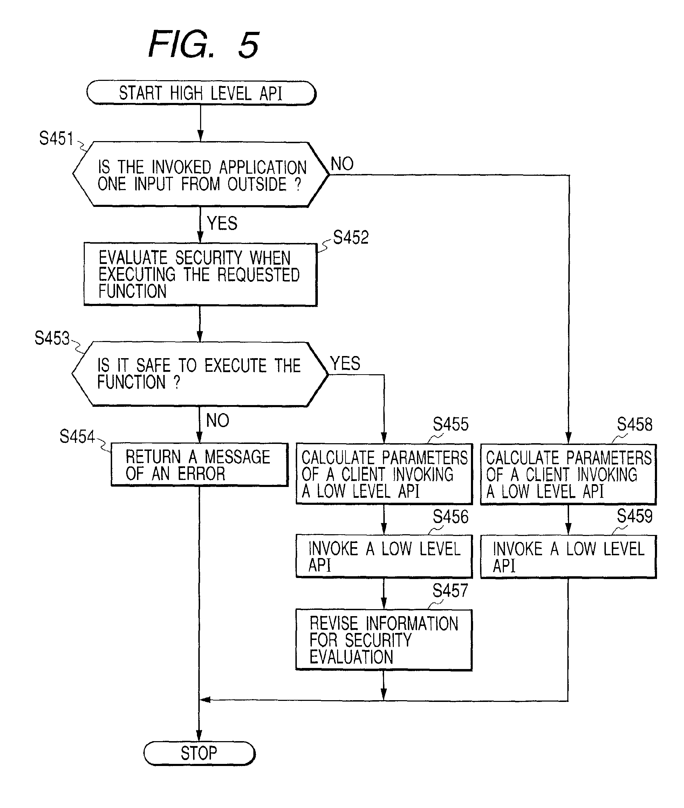

FIG. 5 is a flowchart showing an operation procedure of a high level API where a certificate is not inspected. In the Figure, the processes of steps S401 to S404 are replaced with a process of step S451. Other step processes (S452 to S459) are similar to the step processes of FIG. 4 (S405 to S412).

In step S451, whether or not the application that invoked a high level API is input from the outside of the client 101 is judged. Concretely, one example of a method would be as follows: if an address where an application exists is in the ROM 109, the application is judged to exist inside from the beginning, and if the address is in the RAM 108, the application is judged to be input from the outside. This method is applicable in the case where the application that exists inside is always executed from the ROM 109 and the application input from the outside is always placed in the RAM 108 to be executed from there.

Another method would be as follows: flags are provided in each application. For an application input from the outside, the flag is turned ON when the application is input into the client 101 from the outside. For the application that exists inside from the beginning, the flag is turned OFF. By checking the flags, whether or not the application is input from the outside is judged. Here, it is not necessary to ask for a concrete method.

To know whether or not an application is reliable in a simpler way, whether or not an application that invoked a high level API is a Java application may be judged. In this case, it is assumed that all the applications that are input from the outside are Java applications. Java applications rely less upon a system and are easy to be downloaded from the outside to be executed and thus are suitable as a described language for applications input from the outside.

If a high level API is part of the Java Middleware API 205, it is guaranteed that the application is a Java application 206 as long as the Java Middleware API 205 is not permitted to be invoked from the native API 203. In this case, therefore, it is possible to judge whether or not an application is reliable even without providing a step process to judge whether or not the application is a Java application.

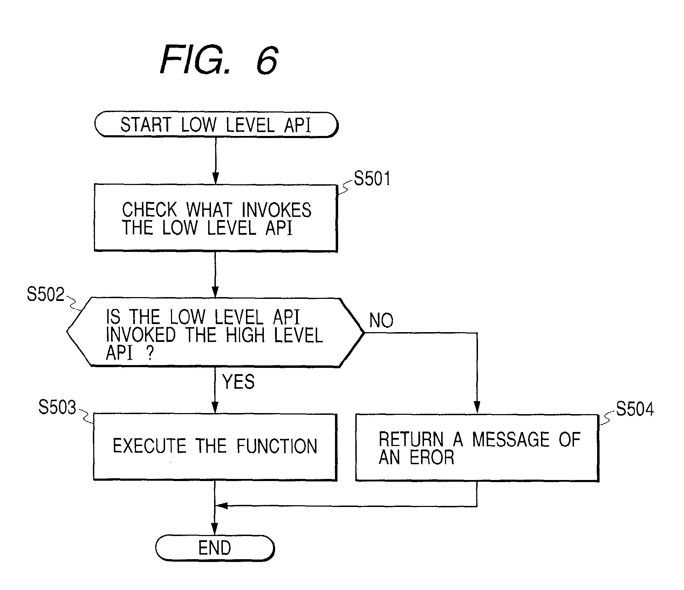

FIG. 6 is a flowchart showing an operation procedure of a low level API. As shown in FIG. 4, a low level API is invoked from a high level API. First, the client checks what invokes the low level API (step S501). As has been shown in FIG. 4, when the invoking client is passed as parameters, the parameters are checked. If it is signed with a secret key or a common key, the key is verified to authenticate the invoking client. Or, if possible, a call stack is examined to check the invoking client.

According to the result of checking in step S501, whether or not the low level API is invoked by the corresponding high level API is judged (step S502). If it is the high level API, the function provided by the low level API is executed (step S503). On the other hand, if it is not the high level API that invoked the low level API, a message of an error is returned (step S504). After this, the processing finishes.

If the low level API is only invoked from a reliable application or only invoked in a safe way, the steps S501 and S502 are unnecessary and simply the function in step S503 may be executed.

However, if there is not such limitation in invoking the low level API, that is, if there is a possibility that the low level API is invoked from an unreliable application, which has to be rejected by a sequence in the low level API, it could be requested that the low level API can be invoked without setting information on the invoking client in a reliable application.

Operation processing of a low level API that satisfies this condition will be described.

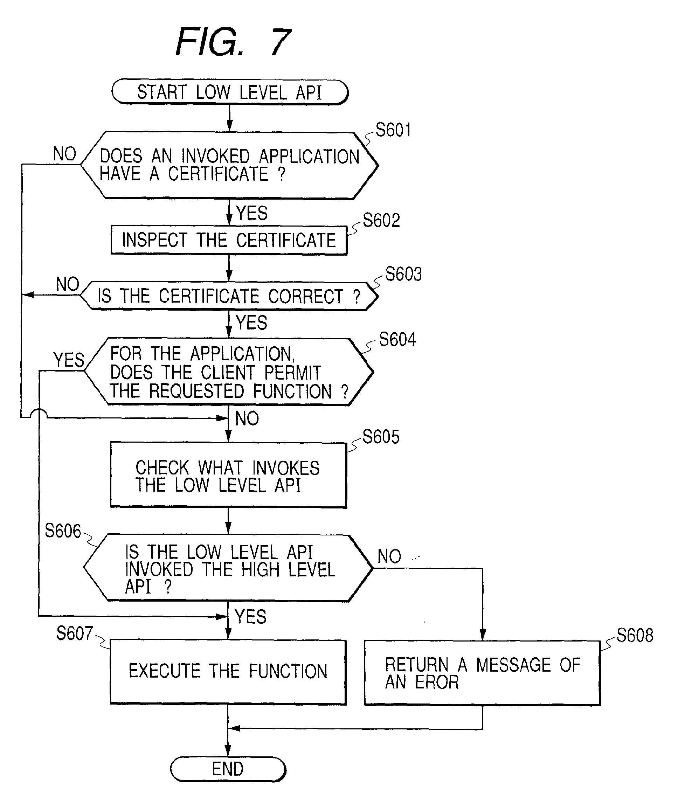

FIG. 7 is a flowchart showing an operation procedure of a low level API. In the Figure, after a low level API is invoked not only from a high level API but also from any function or method, the low level API first judges whether or not the code 103 of an application that invoked the low level API has a certificate (step S601).

If the code 103 has a certificate, the certificate 104 included in the code 103 is inspected (step S602). In this inspection, as already described, the certificate 104 is verified with the public key of the third-party organization. According to the result, whether or not the certificate 104 is correct is judged (step S603).

If the certificate 104 is correct, whether or not to permit the code creator indicated by the certificate 104 to execute the function that the low level API should execute is judged (step S604). In this judgment, a table (not shown) is used in which code creators and corresponding permitted functions are noted. Or, the certificate 104 itself may have a list of permitted functions. Furthermore, API logic itself may have a step process to judge whether or not the code creator is OK. And if the function execution is permitted, the function provided by the low level API is executed (step S607).

On the other hand, when the application does not have a certificate in step S601, when the certificate is not correct in step S603, or when the function that the low level API should execute is not permitted to be executed in step S604, what invokes this API is checked (step S605).

As has been shown in FIG. 4, when the invoking client is passed as parameters, the parameters are checked. If it is signed with a secret key or a common key, the key is verified to authenticate the invoking client. Or, if possible, a call stack is examined to check the invoking client.

According to the result of the checking, whether or not the low level API is invoked by the corresponding high level API is judged (step S606). If it is the high level API, the function provided by the low level API is executed (step S607). On the other hand, if it is not the high level API that invoked the low level API, a message of an error is returned (step S608). After this, the processing finishes.

In the processes shown in FIG. 7, the application has the certificate 104. When function execution is permitted, the function of the low level API can be executed and it is not necessary to set information on an invoking client. This enables the low level API to be invoked not just from the high level API shown in FIG. 4.

It will be unnecessary to set information on an invoking client as shown in step S411 of FIG. 4. Naturally, in the case where a low level API is able to know the invoking client such as by examining the call stack, it is not necessary from the beginning to set the information on the invoking client, as already described. Nevertheless, as it is difficult for a low level API to know all that is permitted as invoking clients, it still has significance in this processing where the low level API can be invoked from the high level API.

Furthermore, in the process shown in FIG. 7, the certificate is inspected to judge whether or not the application is reliable. As long as the application can be judged, other methods may be applied instead of verifying the certificate. Such a method may be a unique method of a native system that can not be known to the code 103 input from the outside.

As described, in the process shown in FIG. 4, security evaluation when the requested function is executed in step S405 has been shown.

Next, how the security evaluation is actually carried out will be described according to a concrete example.

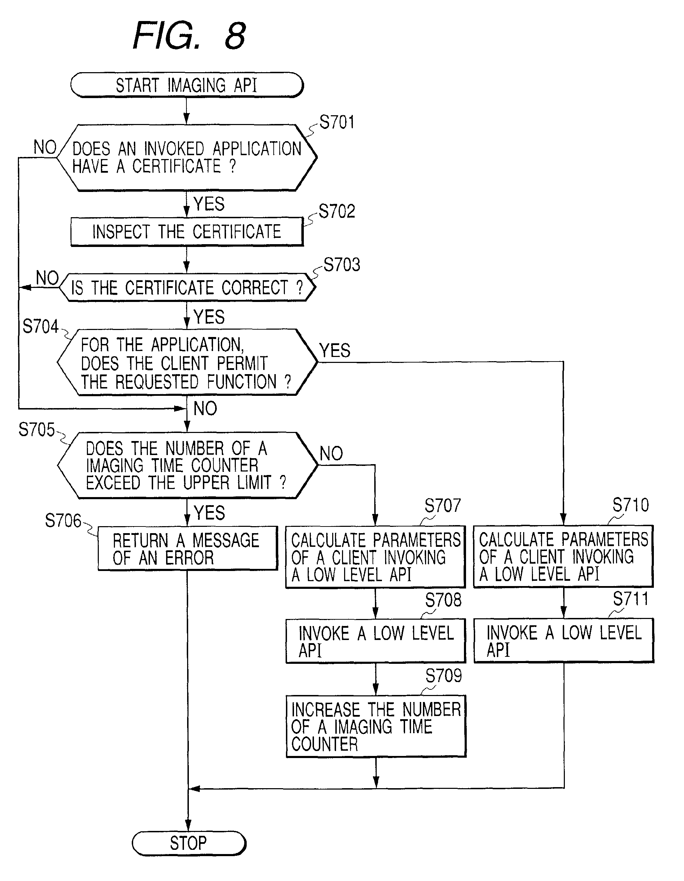

FIG. 8 is a flowchart showing an operation procedure of an imaging API being a high level API. The client 101 has, as described, an imaging apparatus 112 with which imaging can be done. During imaging operation, mechanical parts such as a shutter are driven, so that too hard action may cause damage to equipment. Malicious software for such purpose must be prevented. Therefore, a case will be described where the number of imaging times is counted after an electric source is turned ON, and the upper limit on the number of imaging times is set for the execution from an unreliable application.

In the Figure, steps S701 to S704, steps S706 to S708, step S710 and step S711, correspond to steps S401 to S404, steps S407 to S409, step S411 and step S412 in FIG. 4 respectively. A description of these is omitted.

If an application is unreliable for such a reason as it does not have a certificate, whether or not the number of an imaging time counter exceeds the upper limit is judged (step S705). Here, the imaging time counter is initialized to a value 0 at the time when the electric source of the client 101 is turned ON. If it exceeds the upper limit, a message of an error is returned (step S706).

If the imaging time counter does not exceed the upper limit, processes after step S707 are executed, and an actual imaging function is executed by invoking a corresponding low level API. After this, the number of the imaging time counter is increased (step S709). Then, the processing finishes.

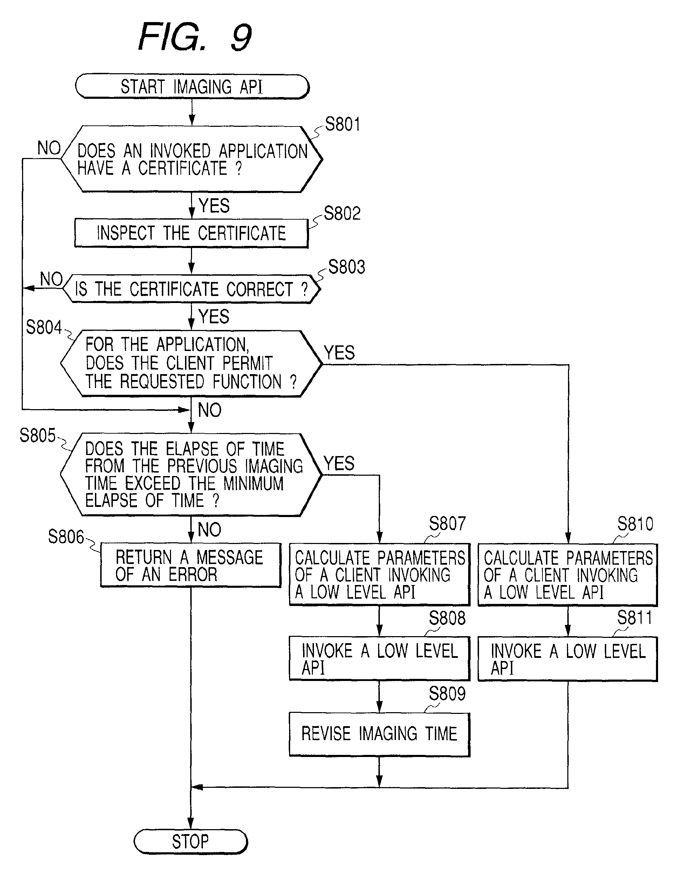

To prevent the imaging apparatus 112 from being damaged, it is necessary to prevent imaging from being repeated at very short intervals, in addition to limiting the number of imaging times. FIG. 9 is a flowchart showing an operation procedure of an imaging API that prevents imaging from being repeated at very short intervals. Processes of FIG. 9 are almost the same as those of FIG. 8. Except for processes of step S805 corresponding to step S705 and except for step S809 corresponding to step S709, the rest of the step processes are the same. Therefore, a description of the same step processes is omitted.

In the Figure, if an application is unreliable for such a reason as it does not have a certificate, whether or not the elapse of time from the previous imaging time exceeds the minimum elapse of time is judged (step S805). If it does not exceed, a message of an error is retuned (step S806).

On the other hand, if it exceeds, processes after step S807 are executed, and actual imaging function is executed by invoking a corresponding low level API. After that, imaging time is revised (step S809). That is, the present time is stored as a value of imaging time. This is done to prepare for the next time when the process of the S805 is executed.

To prevent the imaging apparatus 112 from being damaged, it will be more effective to combine the processing of FIG. 8 and FIG. 9. For example, by storing the imaging time and the number of imaging times, it will be possible to provide restrictions that prohibit imaging from being done one hundred times or more within one minute.

This serves to improved security in other aspects as well as the prevention of damage caused to the imaging apparatus 112. For example, the number of transmitted e-mail may be given the upper limit so that the client 101 would not be used as a means of transmitting a large amount of e-mail such as spam mail.

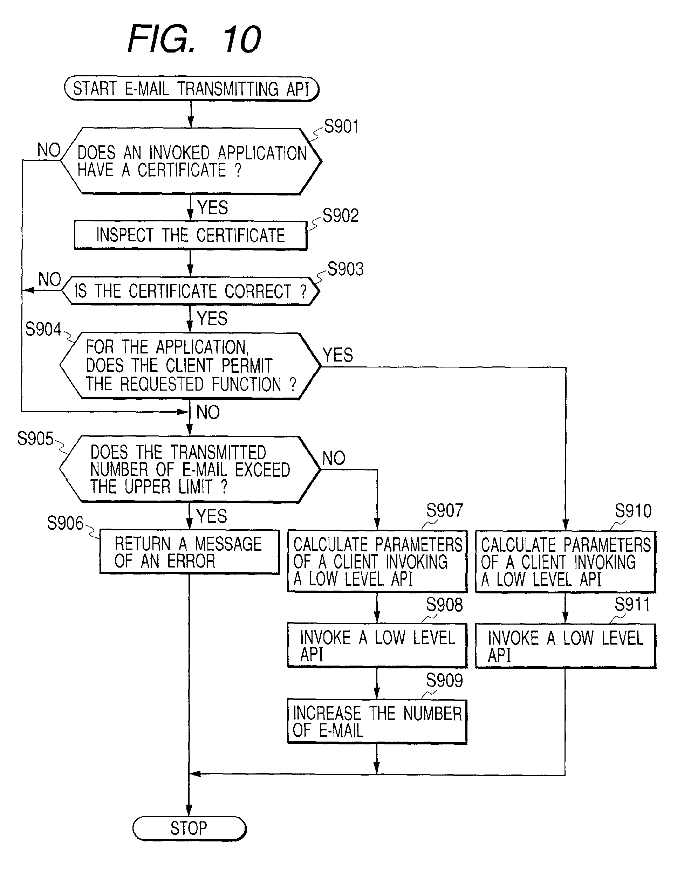

FIG. 10 is a flowchart showing an operation procedure of an e-mail transmitting API. Processes of FIG. 10 are almost the same as those of FIG. 8. Except for processes in step S905 corresponding to step S705 and except for step S909 corresponding to step S709, the rest of the step processes are the same. Therefore, a description of the same step processes is omitted.

In the Figure, if an application is unreliable for a reason as it does not have a certificate, whether or not the number of transmitted e-mail exceeds the upper limit is judged (step S905). If it exceeds, a message of an error is retuned (step S906).

On the other hand, if it does not exceed the upper limit, processes after step S907 are executed, and an actual e-mail transmitting function is executed by invoking a corresponding low level API. After this, the number of transmitted e-mail is increased (step S909). Then, the processing finishes.

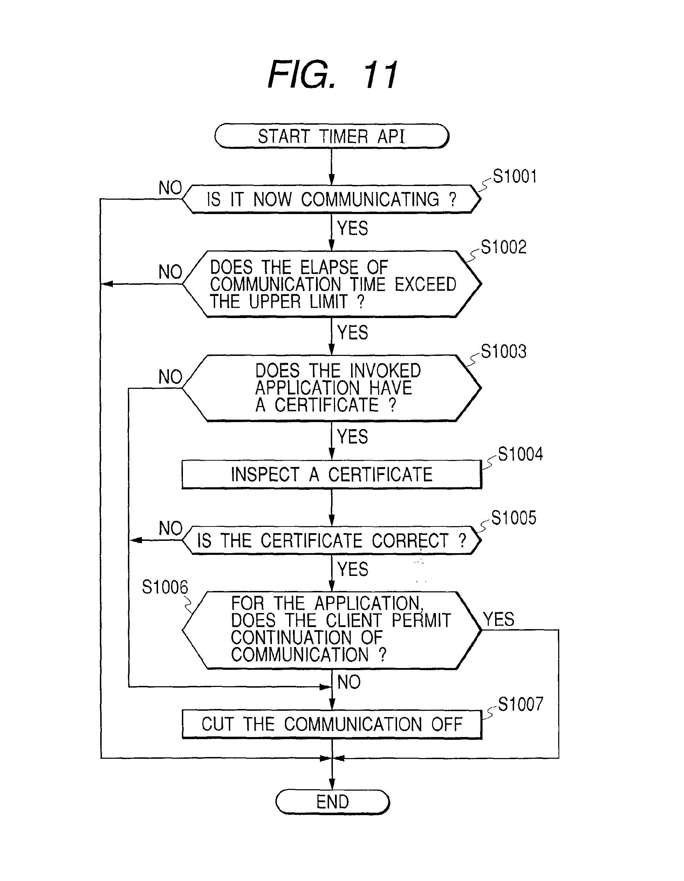

Next, processing for setting the upper limit of communication time will be shown, which is slightly different from the above-described processing of the high level API. FIG. 11 is a flowchart showing an operation procedure of a timer API. This processing prevents an unreliable application from communicating by means of the wireless communication 111 for a long time.

When a timer API that measures time is invoked from the OS 202, the timer API first judges whether or not the wireless communication 111 is communicating (step S1001). If it is communicating, whether or not the elapse of communication time exceeds the upper limit is judged (step S1002). If it exceeds the upper limit, processes of steps S1003 to S1006 are done as in steps S401 to S404 of FIG. 4. And whether or not the application using the wireless communication 111 is reliable and whether or not the communication can be continued are judged (step S1006). If the application is not reliable or the continuation of communication is not permitted, the communication is cut off (step S1007). After this, the processing finishes.

So far, concrete examples of security evaluation have been shown. However, the present invention is not limited to these examples in terms of preventing the malfunction and demolition of the client 101 and the reinforcement of security, and is applicable to various cases.

In the above embodiment, a method is shown in which the execution of the function is separated into two layers; the high level API and the low level API. This enables a reliable application to invoke a low level API directly, so that rapid operation is expected. However, the present invention is not limited to this method.

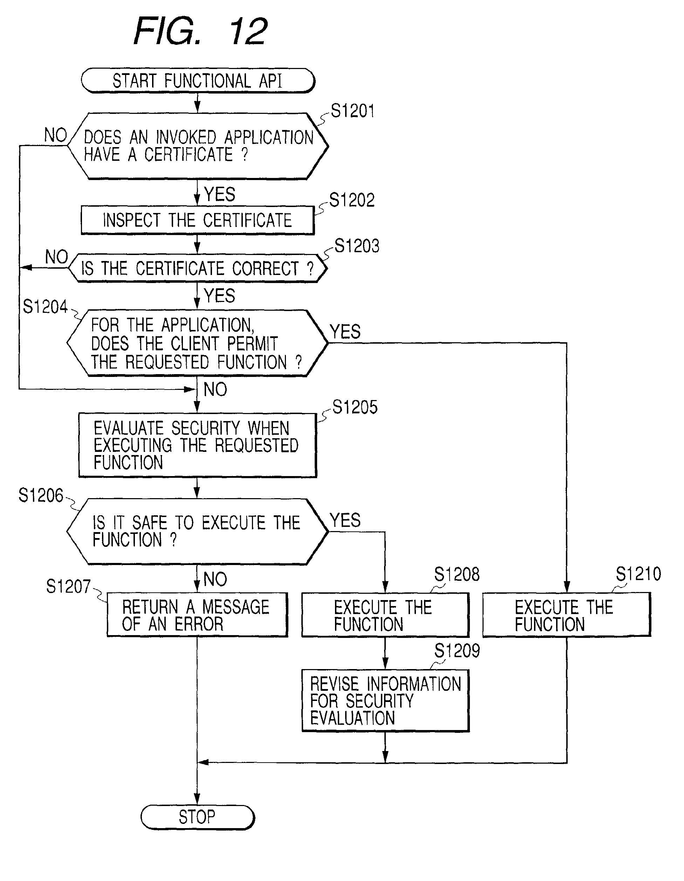

FIG. 12 is a flowchart showing an operation procedure of a function API where security evaluation and function execution are carried out by one API.

In the Figure, processes of steps S1201 to S1207 correspond to those of steps S401 to S407 of FIG. 4. In the process of step S1204, if an application that invoked the function API is permitted to execute the requested function, it simply executes the function (step S1210). And if the application is judged to be safe to execute the function in step S1206, it executes the function (step S1208). After that, information for security evaluation is revised (step S1209). In this way, these processes are handled by one API.

Furthermore, although this invention needs hardware, it can be implemented with programs that operate in each apparatus. Therefore, if a storage medium stores a program code of software that implement the function described in the embodiment, the function can be implemented by reading and executing the program code from the storage media.

As described according to the present invention, when a code is judged to be safe even though it is unreliable, it can execute the function. It is thus possible to safely execute unreliable software that is input from the outside.

This can prevent the execution of malicious programs that intend to cause the malfunction and demolition of equipment. This also gives software input from the outside authorization for less-limited equipment control.

According to the present invention, while an unreliable code is being executed, if a second control means is first booted, a first control means executes the function so that the unreliable code would not directly boot the first control means and execute a function. This not only enhances security but also enables the function to be executed more rapidly and efficiently because a reliable code can directly boot the first control means not via the second control means.

Furthermore, according to the present invention, when the first control means is booted, the second control means revises information that is used by a security evaluating means for security evaluation, so that function limitation based on the security evaluation can be achieved in various forms. It is possible to make the function limitation effective only for an unreliable code and not for a reliable code.

## Claims

1. An information processing apparatus for executing a requested function in accordance with the execution of a program code, comprising:
reliability judging means for judging the reliability of said program code;
security evaluating means for evaluating the security of said function requested by said program code, when said reliability judging means judges said program code to be unreliable; and
control means for executing said requested function, when said security evaluating means evaluates said requested function as being safe.

2. An information processing apparatus according to claim 1, wherein said control means comprises first control means for executing said requested function, and second control means for booting said first control means; and
said first control means executes said requested function, if said first control means is booted from said second control means when said unreliable program code is executed.

3. An information processing apparatus according to claim 2, wherein if said first control means is booted from said second control means when said unreliable program code is executed, said first control means executes said requested function; and said second control means revises said information used for evaluating security by said security evaluating means when said first control means is booted.

4. An information processing apparatus according to claim 1, wherein said reliability judging means judges on the basis of whether or not there is a certificate indicating a creator of said program code and whether or not the execution of said requested function is permitted by said creator.

5. An information processing apparatus according to claim 1, wherein said reliability judging means judges said program code to be unreliable if said program code is input from the outside.

6. An information processing apparatus according to claim 5, wherein said reliability judging means judges said program code to be unreliable if said program code is described in Java language.

7. A method of processing information for executing a requested function in accordance with the execution of a program code, comprising the steps of:
judging the reliability of said program code;
evaluating the security of said function requested by said program code, when said program code is judged to be unreliable; and
executing said requested function when said requested function is evaluated as being safe.

8. A method of processing information according to claim 7, wherein said step of executing said requested function comprises a first control step of executing said requested function, and a second control step of booting said first control step; and
if said first control step is booted from said second control step when said unreliable program code is executed, said requested function is executed in said first control step.

9. A method of processing information according to claim 8, wherein if said first control step is booted from said second control step when said unreliable program code is executed, said requested function is executed in said first control step; and in said second control step, said information for evaluating security is revised when said first control step is booted.

10. A method of processing information according to claim 7, wherein in said step of judging reliability, a judgment is made on the basis of whether or not there is a certificate indicating a creator of said program code and whether or not the execution of said requested function is permitted by said creator.

11. A method of processing information according to claim 7, wherein in said step of judging reliability, said program code is judged to be unreliable if said program code is input from the outside.

12. A method of processing information according to claim 11, wherein in said step of judging reliability, said program code is judged to be unreliable if said program code is described in Java language.

13. A storage medium for storing a program for executing a requested function in accordance with execution of a program code, said program comprising the steps of:
judging the reliability of said program code;
evaluating the security of said function requested by said program code, when said program code is judged to be unreliable; and
executing said requested function when said requested function is evaluated as being safe.

14. A storage medium according to claim 13, wherein said step of executing said requested function comprises a first control step of executing said requested function, and a second control step of booting said first control step; and
if said first control step is booted from said second control step when said unreliable program code is executed, said requested function is executed in said first control step.

15. A storage medium according to claim 14, wherein if said first control step is booted from said second control step when said unreliable program code is executed, said requested function is executed in said first control step, and in said second control step said information for evaluating security is revised when said first control step is booted.

16. A storage medium according to claim 13, wherein in said step of judging reliability, a judgment is made on the basis of whether or not there is a certificate indicating a creator of said program code and whether or not the execution of said requested function is permitted by said creator.

17. A storage medium according to claim 13, wherein in said step of judging reliability, said program code is judged to be unreliable if said program code is input from the outside.

18. A storage medium according to claim 17, wherein in said step of judging reliability, said program code is judged to be unreliable if said program code is described in Java language.
